# EUROPEAN PATENT APPLICATION

(11) **EP 4 752 118 A1**
(43) Date of publication of application: **03.06.2026**
(21) Application number: 24216280.8
(22) Date of filing: 28.11.2024
(51) Int. Cl.: C04B 28/26, C04B 40/02

(54) **METHOD FOR PRODUCING A CARBONATABLE BINDER COMPOSITION**

(71) Applicant: VITO NV, 2400 Mol (BE)
(72) Inventor: PIRES MARTINS, Natália, 2400 Mol (BE); PEYS, Arne, 2400 Mol (BE); NIELSEN, Peter, 2400 Mol (BE); QUAGHEBEUR, Mieke, 2400 Mol (BE)
(74) Representative: AWA Benelux

(57) **Abstract**

The present invention relates to a method for producing a carbonatable binder composition comprising a mixed Ca-Mg silicate, comprising heating a reactive mixture to a temperature between 800 °C and 1400 °C. The reactive mixture comprises between 40 and 90 % by weight of a mineral source material comprising a Mg-comprising silicate, and between 60 and 10 % by weight of a Ca-comprising compound, wherein the percentage by weight of each component of the reactive mixture is based on the total weight of the reactive mixture, wherein the molar ratio of elemental Mg to elemental Si in the mineral source material is between 5:1 and 1:5, wherein the Ca-comprising compound is capable of reacting with the Mg-comprising silicate, and wherein the mineral source material comprises equal to or lower than 10 % by weight of Al, based on the total weight of the mineral source material, wherein the amount of AI is expressed as AI oxide in the mineral source material. The invention further relates to a carbonatable binder composition comprising at least 15 % by weight of akermanite.

## Description

### Technical field

The present invention is related to a method for producing a carbonatable binder composition, i.e. a binder composition that is capable to react with CO₂ during a carbonation reaction. The invention is further related to such carbonatable binder compositions and to methods of carbonating them.

### Background art

Cements enable the manufacture of a wide variety of building materials and structures such as mortar, concrete, or stucco. Upon hydraulic setting, i.e. exposure to or being contacted with water, the cement phase acts as an adhesive for other components or articles and imparts strength thereto. However, cement manufacturing, usually carried out at temperatures of around 1450 °C, is an energy-intensive process that releases high quantities of CO₂.

An approach to compensate for the overall release of CO₂ is the use of carbonatable binder materials which develop strength by reaction with CO₂. Consequently, the CO₂ consumed during the hardening process at least partially counterbalances the CO₂ produced during manufacturing of the carbonatable binder material.

Particularly interesting carbonatable binder materials are calcium silicate (Ca-silicate) based binder materials. An advantage of calcium silicates is that they are abundantly present in natural mineral materials, but also in by-products of mining processes and metal production processes.

A wide variety of industrial by-products and waste streams have proven to be suitable for use in carbonatable binder materials, including fly ash, mine tailings and metal or furnace slags resulting from the production of steel, stainless steel and other metallic materials.

Further, such industrial by-products or waste streams often also comprise Mg-silicates. However, Mg-silicates show lower reactivity to CO₂, requiring high temperatures (> 100 °C) and high pressures (> 50 bar), often in combination with the use of chemical additives, to reach an acceptable conversion. Consequently, these Mg-silicates typically do not carbonate when subjected to the conditions used for carbonation of the Ca-silicates, and they may give rise to the formation of carbonated (i.e. carbonate bonded) articles with inferior mechanical properties, e.g. carbonated articles having insufficient mechanical strength (e.g. compressive strength).

EP 3 694 818 discloses a method of producing a binder composition which can be hardened by both hydration and carbonation. The method comprises a transformation step of heating a starting material to 600-1200 °C for 1 minute to 5 hours to convert at most 80 % of the starting material. The starting material comprises CaO, SiO₂, up to 30 wt.% of other elements than CaO and SiO₂ with regard to the total mass calculated as oxides, and the molar ratio of Ca to Si is between 0.5 and 1.8 The binder composition comprises a hydratable material, which comprises at most 10 wt.% monocalcium silicate, at least 15 wt.% dicalcium silicate, at least 3 wt.% CaO, less than 10 wt.% wollastonite, and from 20 to 80 wt.% phases from the raw materials and/or formed during the transformation step e.g. quartz, Ca₃Si₂O₇, Ca₃SiO₅, Ca₃Al₂O₆, Ca₄Al₂Fe₂O₁₀, gehlenite, merwinite, altered hydrated phases, glassy and/or X-ray amorphous components, and other rock- and soil-forming minerals. Although some akermanite seemed to be present, it was found to have a negative impact on the carbonation.

EP 3 177 578 discloses a carbonatable Ca-silicate composition that can be carbonated with CO₂ at a temperature between 30 °C and 90 °C to form CaCO₃ with a mass gain of at least 10 %. The composition comprises 30 % by weight or more based on the total weight of the Ca-silicate phases, of one or more discrete, crystalline Ca-silicate phases selected from CaSiO₃, Ca₃Si₂O₇ and Ca₂SiO₄, an amorphous Ca-silicate phase, as well as at most 30 % by weight of metal oxides of Al, Fe and Mg. The composition comprises Ca and Si in a molar ratio of elemental Ca to elemental Si between 0.8 and 1.2. The composition can further comprise one or more inert phases (i.e., non-carbonatable under typical carbonation conditions) such as melilite type minerals (for example gehlenite or akermanite) with the general formula (Ca,Na,K)₂ [(Mg, Fe²⁺,Fe³⁺,Al,Si)₃O₇] or ferrite type phases with the general formula Ca2(Al, Fe3+)2O5. The composition may further comprise magnesium silicate in naturally-occurring or synthetic form(s) ranging from trace amount (1%>) to about 50%> or more by weight. In order to obtain a sufficient degree of carbonation and a sufficient strength of the obtained carbonate bonded article, at least 30 % by weight of reactive phases (crystalline and amorphous Ca-silicate) are required, whereas the amount of metal oxides of Al, Fe and Mg should be limited to a maximum of 30 % by weight.

US2020/0055774 discloses a process for producing a clinker composition that can be carbonated from municipal solid waste incinerator residues (ashes). The ashes are primed to uniform the powder size, and are then converted into nodules. The nodules comprise between 56 and 70 wt.% of CaO, Al₂O₃ and SiO₂, with the following target ranges: 35-45 wt.% CaO, 2.0-7.5 wt.% Al₂O₃ and 12-20 wt.% SiO₂. The nodules are fired at a temperature between 1000 and 1100 °C for durations between 30 and 60 minutes. The obtained clinker is meant to comprise one or more of the following CO₂-reactive phases: ellestadite, mono-calcium silicates (e.g. wollastonite), dicalcium silicates (e.g. belite) and tri-calcium silicates (e.g. alite), which comprise 40 to 70 wt.% of the clinker. The remaining portion, not necessarily contributing to binding and strength, may comprise one or more of wadalite, mayenite, akermanite, gehlenite, bredigite, anhydrite, ronderfite, quarz, halite/sylvite and an amorphous fraction.

A disadvantage of the foregoing methods of producing carbonatable binder compositions is the significant amount of calcium present as Ca-silicates that is required as active components in the binder composition, which means the production of significant amounts of CO₂ during manufacturing of the binder compositions resulting from the production of these Ca-silicates. As a result, the potential use or valorisation of Mg-silicate resources is restricted, and the maximal strength might not be obtained (directly) after carbonation. Further, the Ca-silicate compositions may include quantities of inert (i.e. non-reactive) phases that are non-carbonatable under typical carbonation conditions. These inert phases are expected to have a negative impact on the compressive strength development during carbonation.

### Summary of the invention

The present invention aims to overcome one or more of the above drawbacks. It is an aim to provide a method for producing a carbonatable binder composition that can be carbonated at mild temperatures and CO₂ pressure, thereby producing carbonate bonded articles having a high compressive strength.

Yet another aim of the invention is to provide methods that allow the conversion of a wide range of industrial waste streams and by-products, in particular mine tailings and metal slags, typically comprising Mg-silicates and mixed Ca-Mg-silicates, into a carbonatable binder composition, in particular a carbonatable binder composition that can be carbonated at mild temperatures and CO₂ pressure. In other words, it is an aim of the invention to provide valorisation methods for Mg-silicate and mixed Ca-Mg-silicates comprising industrial by-products (in particular slags and tailings) and waste streams, thereby also reducing the environmental footprint of industrial processes producing these by-products (e.g. the production of steel), since the by-products do no longer needs to be disposed of, for example by landfilling.

It is a further aim to provide a method for producing a carbonatable binder composition which, upon carbonation, in particular carbonation in mild conditions, provides mechanical properties, in particular mechanical strength such as compressive strength, similar or even better than existing carbonatable binder compositions comprising or based on Ca-silicates. A further aim is to provide a method for producing a carbonatable binder composition which, upon carbonation, provides articles having an excellent resistance against water, and thus to any possible damage imparted by water.

Yet another aim is to provide a carbonatable binder composition which allows to obtain carbonate bonded articles having mechanical properties, in particular mechanical strength, similar or even better than existing carbonate bonded articles. A further aim is to provide a carbonatable binder composition which allows to obtain carbonate bonded articles having an excellent resistance against water, and thus to any possible damage imparted by water.

The term "carbonatable binder composition" is used interchangeably with "binder composition" in the present disclosure, and is used to describe a binder composition that is capable to undergo a carbonation reaction, i.e. that is capable to react with CO₂. Upon reaction with CO₂, i.e. during the carbonatation reaction, the binder composition advantageously hardens, thereby obtaining a carbonate bonded article. When applied between materials or articles that need to be connected or bonded together, the carbonatable binder composition will provide a bond upon exposure to CO₂, thereby imparting mechanical strength.

Advantageously, the term "carbonatable binder composition" is used in the present disclosure for a non-hydraulic binder composition, i.e. a binder composition that does not require exposure to, or being contacted with, water to react and form a binder that binds the materials, articles or components that need to be connected or bonded.

The terms "carbonate bonded article" and "carbonated article" are used interchangeably in the present disclosure and refer to an article obtained by carbonation of a carbonatable binder composition.

The terms "inert phase" and "non-reactive phase" are used interchangeably in the present disclosure and refer to phases which do not react with CO₂, for example upon carbonation. Consequently, such phases are considered as non-contributing to the strength, in particular the compressive strength, of the obtained carbonated article.

According to a first aspect of the present disclosure, there is provided a method for producing a carbonatable binder composition as set out in the appended claims.

The carbonatable binder composition produced by the method of the first aspect comprises a mixed Ca-Mg silicate, i.e. one single type of mixed Ca-Mg silicate or a plurality of different types of mixed Ca-Mg silicates.

The reactive mixture comprises or substantially consists of a mineral source material and a Ca-comprising compound. In other words, the reactive mixture may comprise further compounds in addition to the mineral source material and the Ca-comprising compound. Whether the reactive mixture comprises further compounds depends, amongst others, on the composition of the mineral source material. Advantageously, the reactive mixture consists of the mineral source material and the Ca-comprising compound, i.e. the sum of their respective amounts equals the weight of the reactive mixture, and the sum of their respective % by weight equals 100 %.

The reactive mixture comprises between 40 and 90 % by weight, preferably between 45 and 85 % by weight, more preferably between 50 and 80 % by weight of a mineral source material, based on the total weight of the reactive mixture.

The reactive mixture comprises between 60 and 10 % by weight, preferably between 55 and 15 % by weight, more preferably between 50 and 20 % by weight of a Ca-comprising compound, based on the total weight of the reactive mixture.

The mineral source material comprises or substantially consists of a Mg-comprising silicate, i.e. one or a plurality of Mg-comprising silicate(s).

The molar ratio of elemental Mg to elemental Si in the mineral source material is between 5:1 and 1:5, preferably between 2:1 and 1:2, more preferably between 1.5:1 and 1:1.5.

The method comprises heating the reactive mixture to a temperature between 800 °C and 1400 °C, preferably between 800 °C and 1375 °C, more preferably between 800 °C and 1200 °C, thereby forming a mixed Ca-Mg silicate and obtaining the carbonatable binder composition.

More particularly, heating the reactive mixture results in the formation of at least akermanite (Ca₂MgSi₂O₇) as mixed Ca-Mg silicate, i.e. the obtained carbonatable binder composition comprises akermanite. The inventors have surprisingly discovered that akermanite shows a high reactivity towards CO₂ in the carbonation reaction, contrary to what is generally assumed.

The mineral source material comprises equal to or lower than 10 % by weight, preferably equal to or lower than 9 % by weight, more preferably equal to or lower than 8 % by weight of aluminium (Al), based on the total weight of the mineral source material, wherein the amount of Al is expressed as Al oxide in the mineral source material.

The inventors have discovered that when the reactive mixture comprises Al, Al tends to replace at least partially Mg and Si in the akermanite structure during the akermanite formation upon heating. This leads to a shift from akermanite to gehlenite (Ca₂Al₂SiO₇), in other words this leads to the formation of gehlenite and akermanite-gehlenite intermediate phases at the cost of the akermanite formation. Gehlenite and akermanite are known to have the same crystal structure, which explains why this shift can take place when Al is present in the reactive mixture. Said differently, the presence of Al in the reactive mixture leads to the formation of a solid solution comprising akermanite, gehlenite and intermediate phases, i.e. phases having a structure in-between akermanite and gehlenite. Gehlenite however has a low reactivity towards CO₂, and therefore the bond strength developed when subjected to a CO₂ environment to harden the binder composition remains limited. As a result, a carbonated article containing such a binder composition will have a limited mechanical strength, in particular the compressive strength. Consequently, this akermanite-to-gehlenite shift leads to carbonatable binder compositions having a lower reactivity towards CO₂ in the carbonation reaction, and to carbonated articles having a lower strength, when compared to reactive mixtures that are substantially devoid from Al.

The inventors have, however, surprisingly noticed that the reduction of the compressive strength of a carbonated article remains limited when the reactive mixture contains a limited amount of Al. The inventors have surprisingly noticed that when the reactive mixture comprises at most 10 % by weight of Al, based on the total weight of the mineral source material, wherein the amount of Al is expressed as Al oxide in the mineral source material, the at least partial replacement of Mg and Si in the formed akermanite structure by Al, and thus the akermanite-to-gehlenite shift, is significantly lower than what could reasonably be expected from the Al content in the reactive mixture, and from the reduction in Mg and Si content. Consequently, the reactive mixtures according to the present disclosure lead to the formation of carbonatable binder compositions having a high fraction (amount) of COz-reactive phases and a limited fraction of inert phases, thereby allowing to obtain carbonated articles having a high mechanical strength and resistance against water.

The Ca-comprising compound is capable of reacting with the Mg-comprising silicate, advantageously upon heating the reactive mixture to a temperature as described hereinabove.

Advantageously, the Ca-comprising compound comprises or substantially consists of a Ca-comprising carbonate. The Ca-comprising carbonate advantageously comprises or substantially consists of one or more of calcite, aragonite, chalk, limestone or dolomite. Advantageously, the Ca-comprising carbonate comprises or substantially consists of CaCO₃.

Advantageously, the Mg-comprising silicate is MgSiO₃, Mg₂SiO₄ or diopside (CaMgSi₂O₆), preferably diopside. In other words, the mineral source material advantageously comprises or substantially consists of one or more of MgSiO₃, Mg₂SiO₄ and/or diopside, preferably diopside.

The inventors have surprisingly discovered that the presence of diopside in the mineral source material and thus in the reactive mixture favours the formation of akermanite during heating of the reactive mixture. Said differently, it was surprisingly discovered that the presence of diopside during akermanite formation counteracts the akermanite-to-gehlenite shift, thereby leading to a solid solution comprising a higher fraction of akermanite when compared to the solid solution obtained from mineral source materials that are substantially devoid of diopside. It was further discovered that the same effect is also obtained when the reactive mixture, in particular the mineral source material, comprises one or more components which give rise to the formation of diopside during heating of the reactive mixture. Diopside formed during the heating step was thus also found to counteract the akermanite-to-gehlenite shift.

Without wishing to be bound by any theory, the inventors believe that diopside is capable of taking up/incorporating Al comprised in the mineral source material within its crystal structure. Consequently, for a given amount of Al in the mineral source material, less Al remains available to replace at least partially Mg and Si in akermanite, as explained hereinabove. In other words, diopside is surprisingly found to contribute to the formation of a higher amount of CO₂-reactive akermanite, i.e. a solid solution comprising a larger fraction of CO₂-reactive akermanite and a smaller fraction of more inert gehlenite and intermediate phases.

Advantageously, the mineral source material comprises at least 10 % by weight, preferably at least 15 % by weight, more preferably at least 20 % by weight of diopside, based on the total weight of the mineral source material. The maximum amount of diopside present in the mineral source material is not critical to the invention and may for example amount to 50 % by weight, 75 % by weight or even 100 % by weight, based on the total weight of the mineral source material, for example the mineral source material can substantially consist of diopside. However, it will be understood that the mineral source material also may be free of diopside and still provides the desired reactivity, as long as the mineral source material comprises equal to or lower than 10 % by weight by weight of aluminium (Al), as explained hereinabove.

Advantageously, the method comprises adding a first alkali source to the reactive mixture prior to heating the reactive mixture.

Advantageously, the first alkali source comprises Na and/or K. Advantageously, the first alkali source is a salt, a carbonate, a sulphate or a hydroxide. Advantageously, the first alkali source is a Na and/or K comprising salt, carbonate, sulphate or hydroxide. Non-limiting examples of the first alkali source include Na₂CO₃ and NaOH. Preferably, the first alkali source is added to the reactive mixture as a solid compound or material.

Advantageously, when a first alkali source is added to the reactive mixture, the reactive mixture comprises equal to or lower than 10 % by weight, preferably equal to or lower than 7.5 % by weight, more preferably equal to or lower than 5 % by weight, for example 2 % by weight of the first alkali source, based on the weight of the reactive mixture prior to adding the first alkali source.

Advantageously, when a first alkali source is added to the reactive mixture, the reactive mixture comprises equal to or higher than 0.1 % by weight, preferably equal to or higher than 0.25 % by weight, more preferably equal to or higher than 0.5 % by weight, of the first alkali source, based on the weight of the reactive mixture prior to adding the first alkali source.

The inventors have surprisingly discovered that the addition of a first alkali source to the reactive mixture prior to heating of the reactive mixture allows to reduce the temperature to which the reactive mixture must be heated, thereby producing a carbonatable binder composition having similar composition and characteristics. Whereas without adding the first alkali source the reactive mixture is advantageously heated to a temperature between 1000 °C and 1400 °C, preferably between 1200 °C and 1375 °C, the presence of the first alkali source in the reactive mixture allows to limit the temperature to which the reactive mixture needs to be heated to a temperature between 800 °C and 1200 °C, preferably between 800 °C and 1200 °C, more preferably between 1000 °C and 1200 °C. Thus the overall energy consumption and process costs may be reduced, as well as the total processing time.

In addition, the inventors have surprisingly found that the addition of a first alkali source to the reactive mixture favours the formation of akermanite during the heating of the reactive mixture. Said differently, it was surprisingly found that the presence of such a first alkali source reduces the akermanite-to-gehlenite shift, and thereby leads to a solid solution which contains a higher fraction of akermanite when compared to the solid solution that would be obtained from mineral source materials to which no alkali source was added. More particularly, it was found that during heating of the reactive mixture the first alkali source reacts with Al present in the mineral source material, and results in the formation of an alkali and Al-rich silicate phase, for example alkali-aluminosilicate phases. The alkali and Al-rich phase can be crystalline or amorphous. Consequently, for a given amount of Al in the mineral source material, less Al remains available to replace at least partially Mg and Si in the formed akermanite, as explained hereinabove.

According to a second aspect of the present disclosure, there is provided a carbonatable binder composition as set out in the appended claims.

The carbonatable binder composition comprises or substantially consists of a mixed Ca-Mg silicate. The carbonatable binder composition comprises at least 15 % by weight, preferably at least 17.5 % by weight, more preferably at least 20 % by weight, most preferably at least 25 % by weight, for example at least 30 % by weight or at least 50 % by weight of akermanite (Ca₂MgSi₂O₇), based on the total weight of the carbonatable binder composition.

Advantageously, when the carbonatable binder composition is produced by means of the method of the first aspect of the invention, akermanite is formed during heating the reactive mixture, i.e. the formed akermanite is a result of the reaction of the Ca-comprising compound with the mineral source material, in particular with the Mg-comprising silicate comprises therein. It will be understood that the amount of akermanite in the carbonatable binder composition depends, amongst others, on the composition of the reactive mixture, and in particular on the composition of the mineral source material comprised in the reactive mixture.

As mentioned hereinabove, the inventors have found that akermanite can be carbonated (i.e. is not inert or non-reactive during carbonation) and strongly contributes to the mechanical strength, in particular the compressive strength, of the obtained carbonate bonded articles. The inventors further surprisingly discovered that even small amounts of akermanite are capable of imparting a higher mechanical strength, in particular the compressive strength, of the obtained carbonated articles that cannot be obtained by the use of Ca-silicates.

According to a third aspect of the present disclosure, there is provided a method of reacting a carbonatable binder composition with CO₂, i.e. a carbonation reaction, as set out in the appended claims.

The carbonatable binder composition is according to the second aspect of the present disclosure or obtained by the methods of the first aspect of the present disclosure.

The carbonatable binder composition is contacted with (exposed to, reacted with) CO₂ at a temperature between 10 °C and 100 °C and at a CO₂ pressure equal to or lower than 2 MPa. Contacting the carbonatable binder composition with CO₂ is advantageously performed by means and methods known in the art, such as passing a flow of CO₂ through the binder composition, or placing the binder composition in an environment comprising or substantially consisting of CO₂.

Advantageously, a second alkali source is added to the carbonatable binder composition prior to contacting the carbonatable binder composition with CO₂.

Advantageously, the second alkali source comprises Na and/or K. Advantageously, the second alkali source is a salt, a carbonate, a sulphate or a hydroxide, preferably a hydroxide. Advantageously, the second alkali source is a Na and/or K comprising salt, carbonate, sulphate or hydroxide. A preferred example of the second alkali source is NaOH.

The inventors have found that the addition of a second alkali source, and in particular a Na and/or K comprising hydroxide, preferably NaOH, allows to increase the pH of the binder composition. It is known that a higher pH can improve the kinetics of the carbonation reaction. It was further found that even for low amounts of such a second alkali source, there is an effect on the pH of the binder composition, said differently, the minimum amount of the second alkali source is not critical.

Advantageously, the second alkali source is added to the carbonatable binder composition as a solid compound. Advantageously, the solid second alkali source is added in an amount of equal to or lower than 15 % by weight, preferably equal to or lower than 10 % by weight, more preferably equal to or lower than 7.5 % by weight, based on the weight of the carbonatable binder composition.

Alternatively or additionally, yet advantageously, the second alkali source is added to the carbonatable binder composition as an aqueous solution. Advantageously, the aqueous solution has a concentration of the second alkali source equal to or lower than 15 M, preferably equal to or lower than 10 M, for example equal to or lower than 7.5 M. Advantageously, the aqueous solution comprising the second alkali source is added to the carbonatable binder composition in an amount between 5 and 60 % by weight, based on the weight of the carbonatable binder composition.

An advantage of the foregoing methods of producing a carbonatable binder material is that the reactive mixture used to obtain the carbonatable binder composition can comprise a high amount, up to 90 % by weight, of Mg-comprising silicate comprising by-products or waste products from industrial processes. More, these by-products and waste products can be obtained from a wide variety of industrial processes. The inventive methods thus have a high valorisation potential of industrial by-products and waste products, while the valorisation possibilities of such waste streams have always been limited up to now.

An advantage of the carbonatable binder compositions of the present invention is that they can be carbonated at moderate conditions of temperature (between 10 and 100 °C) and CO₂ pressure (equal to or lower than 2 MPa), thereby reducing the energy consumption of the carbonation process. Without wishing to be bound by any theory, the inventors believe that this is realised due to the high amount of akermanite present in the binder composition.

Further, despite the mild carbonation conditions, the carbonate bonded articles obtained from the inventive carbonatable binder compositions show a high mechanical strength, in particular a compressive strength, which was surprisingly significantly higher than the mechanical strength of prior art carbonate bonded articles obtained by carbonation, in particular articles obtained by carbonation of other Mg-silicates, other mixed Ca-Mg-silicates, or, surprisingly, even Ca-silicates at similar conditions, and equal to and even higher than the mechanical strength of prior art carbonate bonded articles obtained by carbonation at high temperature and/or high CO₂ pressure. Without wishing to be bound by any theory, the inventors believe that this is realised due to the akermanite present in the binder composition. The inventors surprisingly discovered that the presence of a limited amount of akermanite already suffices to achieve a high increase of the compressive strength upon carbonation, the increase being higher than expected from carbonation of corresponding Ca-silicates.

### Brief description of the figures

Aspects of the invention will now be described in more detail with reference to the appended drawings, wherein same reference numerals illustrate same features and wherein:
Figure 1 shows the akermanite content in four carbonatable binder compositions obtained by the methods of the present invention, as well as their CO₂ capture upon carbonation, and the compressive strength of the obtained carbonated articles.
Figure 2 shows the content of three phases in the four carbonatable binder compositions, as well as the degree of reaction for two of the phases.
Figure 3 shows the phase simulation in function of the CaCO₃ content in the reactive mixture used to produce the carbonatable binder compositions, as well as the aluminium content in the akermanite phase.
Figure 4 shows the compressive strength of three carbonated articles obtained by the methods of the present invention with three further carbonatable binder compositions comprising a wt. % of CaCO₃ (Cc) varying between 40 and 45 wt.% and between 0 and 2 wt. % of Na₂CO₃ (Nc) as first alkali source.
Figure 5 shows the phase simulation in function of the CaCO₃ content in the reactive mixture used to produce the carbonatable binder compositions, as well as the aluminium content in the akermanite phase.
Figure 6 shows the amount of melt phase in the reactive mixtures in function of the heating temperature.
Figure 7 shows the compressive strength of three further carbonated articles.

### Description of embodiments

The reactive mixture heated to form (i.e. produce or manufacture) a carbonatable binder composition comprises or substantially consists of between 40 and 90 % by weight of a mineral source material comprising or substantially consisting of a Mg-comprising silicate, and between 60 and 10 % by weight of a Ca-comprising compound, based on the total weight of the reactive mixture.

A wide variety of materials or compositions can be used as the Ca-comprising compound. Advantageously, the Ca-containing (or Ca-comprising) compound comprises or substantially consists of an industrial waste product, preferably originating from mining, quarrying, or cement sectors. The inventors believe that the chemical composition of the Ca-containing compound, i.e. the presence of calcium, and the reactivity with the mineral source material are the essential features of the Ca-comprising compound in the reactive mixture. In other words, the exact composition of the phase and the physical properties of the Ca-comprising material are considered less important for providing an optimal reactive mixture.

Advantageously, the Ca-comprising compound comprises or substantially consists of an inorganic Ca-comprising compound. Non-limiting examples of inorganic Ca-comprising compounds include Ca oxide, Ca nitrate, Ca sulphate, Ca carbonate, Ca phosphate, Ca chloride. A particularly preferred Ca-comprising compound is Ca-carbonate, in particular CaCO₃. The inventors have found that when the Ca-comprising compound comprises or substantially consists of CaCO₃, the formation of phases that can react with CO₂ is accelerated during the heat treatment.

Alternatively, yet also advantageously, the Ca-comprising compound comprises or substantially consists of an organic Ca-comprising compound. Non-limiting examples of organic Ca-comprising compounds include Ca citrate, Ca oxalate, and Ca acetate.

Advantageously, the Ca-comprising compound is a particulate material, i.e. comprises solid particles. Advantageously, the particulate material has a particle size distribution having a d₅₀ value between 0.5 µm and 500 µm, preferably between 1 µm and 200 µm, more preferably between 2 µm and 150 µm, or between 5 µm and 100 µm, as measured by laser diffraction, in particular laser diffraction performed according to standard ASTM B822-20 (2020). It will be understood that the particle size and the particle size distribution can vary, depending on the source from which the Ca-comprising compound is provided, as well as any optional pre-treatments to obtain a certain average size or particle size distribution. For example, the reaction rate and yield of the heating operation can be improved by using a particulate Ca-comprising compound having a particle size distribution having a d₅₀ value between 5 µm and 75 µm, preferably between 10 µm and 40 µm, as measured by laser diffraction, in particular laser diffraction performed according to standard ASTM B822-20 (2020).

The molar ratio of elemental Mg to elemental Si in the mineral source material may vary depending on the mineral source material's composition, but is between 10:1 and 1:10, preferably between 5:1 and 1:5, more preferably between 2:1 and 1:2, most preferably between 1.5:1 and 1:1.5.

An advantage of the present invention is that a wide variety of materials or compositions can be used as the mineral source material, as long as the molar ratio of elemental Mg to elemental Si in the mineral source material is between 10:1 and 1:10, preferably between 5:1 and 1:5, more preferably between 2:1 and 1:2, most preferably between 1.5:1 and 1:1.5.

The inventors have surprisingly discovered that the relative amount, for example the molar ratio, of Mg to Ca in the reactive mixture is not an essential parameter for the present disclosure, in particular the methods of the first aspect, as long as the reactive mixture comprises the mineral source material and the Ca-comprising compound in an amount as described hereinabove. It was discovered that it is the molar ratio of elemental Mg to elemental Si in the mineral source material, together with the % by weight of the mineral source material and the % by weight of the Ca-comprising compound which must be within the ranges mentioned hereinabove, that impacts the characteristics and composition of the carbonatable binder compositions obtained by the methods of the first aspect.

Advantageously, the molar ratio of Mg to Ca in the reactive mixture is comprised between 1:20 and 20:1, preferably between 1:10 and 10:1, more preferably between 1:5 and 5:1, for example between 1:4 and 4:1, or between 1:4 and 2:1.

Non-limiting examples of suitable mineral source materials include naturally occurring minerals, industrial mineral waste streams and industrial mineral side products. Examples of suitable waste streams and side products (i.e. by-products) include, without being limited thereto, metallurgical slags (for example from ferronickel production), mine tailings (for example Mg-silicate comprising mine tailings) and leaching residues. It will be understood that mixtures of two or more of the foregoing can also be used as the mineral source material.

For example, mining operations targeting mafic and ultramafic rocks (which contain high levels of magnesium) may generate mixed Mg-silicate or Ca-Mg-silicate-comprising residues. For example, mining of mafic rocks can release a substantial amount of pyroxene and amphibole minerals (Mg-silicate or mixed CaMg-silicate) into tailings. Serpentine (Mg₃Si₂O₅(OH)₄), a water-rich Mg-silicate that also contributes to the total magnesium silicate content, is often found in weathered residues. Merwinite (3CaO·MgO·2SiO₂) is commonly found in steel slags. Olivine (2MgO·2FeO·SiO₂) is another mineral present in ferronickel slags or mine tailings that contributes to the magnesium silicate content.

Advantageously, the mineral source material is a particulate material, i.e. comprises solid particles. Advantageously, the particulate material has a particle size distribution having a d₅₀ value between 0.5 µm and 500 µm, preferably between 1 µm and 200 µm, more preferably between 2 µm and 150 µm, or between 5 µm and 100 µm, as measured by laser diffraction, in particular laser diffraction performed according to standard ASTM B822-20 (2020). It will be understood that the particle size and the particle size distribution can vary, depending on the source from which the mineral source material is provided, as well as any optional pre-treatments to obtain a certain average size or particle size distribution. For example, the reaction rate and yield of the heating operation can be improved by using a particulate mineral source material having a particle size distribution having a d₅₀ value between 5 µm and 75 µm, preferably between 10 µm and 40 µm, as measured by laser diffraction, in particular laser diffraction performed according to standard ASTM B822-20 (2020).

Advantageously, the mineral source material comprises at least 10 % by weight, preferably at least 15 % by weight, more preferably at least 20 % by weight of a pyroxene, based on the total weight of the mineral source material, wherein the pyroxene has the general formula XY(Si,Al)₂O₆, wherein
X individually is Ca, Na, Fe(ll) or Mg; and
Y individually is Cr, Al, Mg, Co, Mn, Sc, Ti, V, Fe(ll) or Fe(III).

Advantageously, Y (i.e. the Y ion) has a size equal to or lower than the size of X (i.e. the X ion).

Advantageously, at least one of X and Y is Mg, i.e. the pyroxene is a Mg-comprising pyroxene. When at least one of X and Y is Mg, the Mg-comprising silicate of the mineral source material advantageously comprises or substantially consists of the Mg-comprising pyroxene. It is known that Mg-comprising pyroxenes show a high reactivity towards Ca-comprising compounds, in particular CaCO₃, resulting in the formation of akermanite. Non-limiting examples of preferred pyroxenes include diopside, CaMgSi₂O₆ (X=Ca and Y=Mg) and enstatite, MgSiO₃ (X=Y=Mg), of which diopside is particularly preferred.

Alternatively or additionally, yet advantageously, the mineral source material comprises at least 10 % by weight, preferably at least 15 % by weight, more preferably at least 20 % by weight of an amphibole, based on the total weight of the mineral source material, wherein the amphibole has the general formula Z₇Si₈O₂₂(OH)₂, wherein Z individually is selected from the group consisting of: Ca, Mg, Na, Cr, Al, Co, Mn, Sc, Ti, V, Fe(ll) and Fe(III).

Advantageously, at least one of Z is Mg, i.e. the amphibole is a Mg-comprising amphibole. It is known that Mg-comprising amphiboles show a high reactivity towards Ca-comprising compounds, in particular CaCO₃, resulting in the formation of akermanite.

Amphiboles are generally considered as being detrimental to human health, but are often disposed of, despite their health risk. Consequently, the methods of the present disclosure allow to convert these products into a useful product that is no longer detrimental to human health, thereby providing a valorisation of such hazardous products.

Advantageously, the mineral source material further comprises equal to or lower than 20 % by weight of a Ca-comprising compound, based on the total weight of the mineral source material. Non-limiting examples of such a Ca-comprising compound include one or more of calcite, aragonite, chalk, limestone and dolomite.

The inventors have found that the presence of a Ca-comprising compound in the mineral source material allows to reduce the amount of the Ca-comprising compound that needs to be added to the mineral source material in the reactive mixture to form mixed Ca-Mg silicate(s).

However, the mineral source material advantageously comprises equal to or lower than 20 % by weight, preferably equal to or lower than 15 % by weight, more preferably equal to or lower than 10 % by weight of a Ca-silicate, based on the weight of the mineral source material. The inventors have found that the presence of a Ca-silicate in the mineral source material tends to limit the formation of akermanite, and thereby reduce the reactivity towards CO₂.

The mineral source material can further comprise an Fe-comprising compound. Non-limiting examples of Fe-comprising compounds include mixed Mg-Fe silicates such as olivine (general formula (Mg,Fe)₂SiO₄), mixed Ca-Fe silicates (general formula (Ca,Fe)SiO₄), or mixed Ca-Mg-Fe silicates (general formula Ca,Mg,Fe)₂SiO₄). A particular example of an olivine is fayalite (Fe₂SiO₄).

However, it was found that presence of Fe-comprising compounds may favour the formation of compounds having a low reactivity towards CO₂, and thus a low carbonization rate, such as magnetite (Fe₃O₄) or hematite during the heating operation. Consequently, and advantageously, to favour the formation of mixed Ca-Mg-silicates during the heating operation, and in particular the formation of akermanite, the mineral source material comprises equal to or lower than 20 % by weight, preferably equal to or lower than 15 % by weight, more preferably equal to or lower than 10 % by weight, most preferably at most 5 % by weight, such as at most 4 % by weight of Fe, based on the total weight of the mineral source material, wherein the amount of Fe is expressed as Fe oxide in the mineral source material.

Advantageously, the Ca-comprising compound is added to the mineral source material, thereby obtaining a reactive mixture. The Ca-comprising compound can be added by means known in the art, such as by mixing.

Optionally, yet advantageously, a first alkali source is added to the reactive mixture prior to its heating. The first alkali source can be added by means known in the art, such as by mixing.

Advantageously, the first alkali source comprises Na and/or K. Advantageously, the first alkali source is a salt, a carbonate, a sulphate or a hydroxide. Advantageously, the first alkali source is a Na and/or K comprising salt, carbonate, sulphate or hydroxide. Non-limiting examples of the first alkali source include Na₂CO₃ and NaOH.

Advantageously, when a first alkali source is added to the reactive mixture, the reactive mixture comprises between 0.1 % and 10 % by weight, preferably between 0.25 % and 7.5 % by weight, more preferably between 0.5 % and 5 % by weight, most preferably between 1 % and 2.5 % by weight, for example 2 % by weight, of the first alkali source, based on the weight of the reactive mixture prior to adding the first alkali source.

Advantageously, the reactive mixture has a homogeneous composition, i.e. the mineral source material, the Ca-comprising compound and the optional first alkali source are evenly distributed in the reactive mixture.

Advantageously, the reactive mixture is heated in an atmosphere comprising at least 1 % of oxygen, preferably at least 5 %, more preferably at least 10 %. Non-limiting examples include air and a substantially pure O₂ atmosphere. Preferably, the heating operation is performed in air.

The carbonatable binder composition of the present disclosure, in particular the carbonatable binder composition obtained by methods of the present disclosure, comprises at least 15 % by weight, more preferably at least 20 % by weight, most preferably at least 25 % by weight, such as at least 50 % by weight or at least 75 % by weight of akermanite (Ca₂MgSi₂O₇), based on the total weight of the carbonatable binder composition. It is known in the art that akermanite is a crystalline compound.

It was discovered that akermanite shows a high reactivity towards CO₂ in the carbonation reaction. In particular, akermanite shows a high CO₂ uptake at a temperature equal to or lower than 100 °C and at a CO₂ pressure equal to or lower than 2 MPa (20 bar). Consequently, the presence of akermanite in the carbonatable binder composition was found to allow carbonation at moderate temperature and at moderate CO₂ pressure.

More particularly, the presence of even a small amount of akermanite in the carbonatable binder composition has a positive impact on the mechanical strength, in particular the compressive strength, imparted by the binder composition upon carbonation, as well as on the resistance against water of the carbonated article.

Advantageously, the carbonatable binder composition comprises equal to or lower than 20 % by weight, preferably equal to or lower than 15 % by weight, more preferably equal to or lower than 10 % by weight, of other phases from the melilite group (i.e. phases from the melilite group excluding akermanite), based on the total weight of the carbonatable binder composition.

The inventors have surprisingly discovered that these other phases from the melilite group have a very low, even substantially negligible, reactivity towards CO₂ in mild carbonation conditions, i.e. mild temperature (10-100 °C) and CO₂ pressure (at most 2 MPa), contrary to akermanite which has a surprisingly elevated reactivity towards CO₂ in such carbonation conditions. In other words, carbonatable binder compositions comprising a significant amount of such phases, i.e. more than 20 % by weight, based on the total weight of the carbonatable binder composition, require a higher temperature and/or a higher CO₂ pressure for any carbonation to take place.

The inventors have further surprisingly discovered that contrary to akermanite, other phases of the melilite group do not seem to contribute to a large extent to the mechanical strength of the obtained carbonate bonded article, i.e. these phases seem to be more "inert" (i.e. non-reactive with CO₂ during carbonation).

The binder composition can further comprise one or more of merwinite (Ca₃MgSi₂O₈), monticellite (CaMgSiO₄) and diopside (CaMgSi₂O₆). However, those phases show a lower contribution to the strength development upon carbonation of the carbonatable binder composition when compared to akermanite.

Advantageously, the carbonatable binder composition comprises equal to or lower than 20 % by weight, preferably equal to or lower than 15 % by weight, more preferably equal to or lower than 10 % by weight, of merwinite, monticellite and diopside, based on the total weight of the carbonatable binder composition. With *"equal to or lower than 20* % *by weight of merwinite, monticellite and diopside"* is meant in the present disclosure the sum of the respective amounts of each one of merwinite, monticellite and diopside.

The carbonatable binder composition can further comprise a Mg silicate, such as MgSiO₃ and Mg₂SiO₄. It is however known that such Mg silicates tend to have a rather low reactivity towards CO₂, and consequently the amount of Mg silicates in the binder composition is limited. Advantageously, when the binder composition comprises a Mg silicate, it comprises at most 40 % by weight, preferably at most 30 % by weight, more preferably at most 20 % by weight, most preferably at most 10 % by weight, such as 5 % by weight or less of the Mg silicate, based on the total weight of the carbonatable binder composition.

Advantageously, the carbonatable binder composition is a particulate material, i.e. comprises solid particles. The method can optionally comprise a particle size reduction operation, wherein the particle size is reduced, e.g. by means of milling, to enhance the reactivity of the binder composition towards CO₂. Advantageously, the particles have a particle size distribution having a d₅₀ value equal to or lower than 50 µm, preferably equal to or lower than 40 µm, more preferably equal to or lower than 20 µm, as measured by means of laser diffraction, in particular laser diffraction performed according to standard ASTM B822-20 (2020). It will be understood that the desired or optimal particle size distribution, including the d₅₀ value, depends on the application or use of the carbonatable binder composition, i.e. on the carbonate bonded article to be obtained.

The present invention further relates to a method for producing a carbonate bonded article by carbonating the carbonatable binder composition of the invention.

The carbonation operation comprises contacting the carbonatable binder composition with CO₂ (i.e. exposing to), so that the binder composition reacts with the CO₂. Advantageously, upon exposure to CO₂, the akermanite and any other compounds that are reactive to CO₂ in the binder composition convert into a carbonate bonded article.

The carbonation operation is advantageously performed at a temperature between 10 °C and 100 °C, preferably between 20 °C and 90 °C, more preferably between 30 °C and 80 °C, such as between 50 °C and 70 °C.

The carbonation operation is advantageously performed at a CO₂ pressure equal to or lower than 10 MPa, preferably equal to or lower than 5 MPa, more preferably equal to or lower than 2 MPa.

Advantageously, the carbonation operation is performed at a temperature between 10 °C and 100 °C, preferably between 20 °C and 90 °C, and at a CO₂ pressure equal to or lower than 5 MPa, preferably equal to or lower than 2 MPa.

Advantageously, the carbonatable binder composition is exposed to a gas comprising at least 15 % by volume, preferably at least 30 % by volume, more preferably at least 50 % by volume, for example 75 % by volume or substantially 100 % by volume of CO₂.

Advantageously, the carbonation operation is performed by means and methods known in the art, such as passing a gas flow comprising or substantially consisting of CO₂ through the binder composition, or placing the binder composition in an environment comprising or substantially consisting of CO₂. A preferred method comprises placing the binder composition in a CO₂-comprising environment.

Advantageously, the carbonation reaction is performed without the active incorporation of water into the carbonatable water composition, i.e. the carbonation operation is advantageously a non-hydraulic binding operation.

Optionally, the carbonatable binder composition is shaped prior to the carbonation operation. The optional shaping operation comprises adding further compounds to the carbonatable binder composition, such as - without being limited thereto - fillers such as limestone filler, fine quartz, quartz flower, nucleation agents and workability improvers. Advantageously, no hydraulic binder additives are added during the shaping operation. It will be understood that the selection of the further compounds and their amount depends on the purpose of the carbonate bonded article obtained after the carbonation operation.

Advantageously, the shaping operation comprises adding a second alkali source to the carbonatable binder composition. Advantageously, the second alkali source is an alkali source that is capable of increasing the pH value of the carbonatable binder composition. A particularly preferred second alkali source is NaOH.

In a particular embodiment, a construction material composition is prepared during the shaping operation by adding construction material additives to the carbonatable binder composition. Upon exposure of the construction material composition to CO₂ during the carbonation operation, a (carbonated) construction material is obtained. Non-limiting examples of suitable construction material additives include sand, pebbles, aggregates, fibres, inert fillers and additives such as limestone filler, fine quartz and quartz flower.

The present disclosure further relates to a carbonated (i.e. carbonate bonded) article obtained by the carbonation method of the invention. Advantageously, the carbonate bonded article has a compressive strength of at least 5 MPa, preferably at least 10 MPa.

Non-limiting examples of carbonate bonded articles include carbonate bonded concrete, stone, clinkers, bricks and tiles. It will be understood that the article obtained depends on the composition of the binder composition, and more particularly of any compounds added during the optional shaping operation.

The carbonate bonded articles, and in particular the articles obtained from carbonation of the construction material composition as described hereinabove, are advantageously used in applications including, but not limited to, infrastructure, construction, pavement, and landscaping industries.

### Examples

### Example 1

A mining residue comprising 45 wt.% SiO₂, 22 wt.% MgO, 14 wt.% CaO, 11 wt.% Fe₂O₃, and 4 wt.% Al₂O₃ was used as mineral source material. The main mineral phases present were actinolite (40 %), diopside (33 %), olivine (9 %), enstatite (7 %) , and feldspar (4 %), in addition to minor amounts (<2.5 % ) of magnetite, talc, serpentine, and chlorite. Four reactive mixtures were prepared by adding 20, 25, 30 or 35 % by weight of CaCO₃, based on the total weight of the respective mixture, to the mineral source material. The mixtures were heated to 1200 °C in air at a heating rate of 3 °C/min, maintained at 1200 °C in air for 30 minutes, and cooled to room temperature at a cooling rate of 3 °C/min.

The obtained carbonatable binder compositions were then milled to obtain a particulate material having a d₅₀ of 10 µm, as measured by laser diffraction according to standard ASTM B822-20 (2020). The moisture content of the binder compositions was adjusted to 8 % by weight of moisture, based on the total weight of the binder composition. The binder compositions were then shaped into cylinders of 25 mm diameter and 20 mm height, which were carbonated by contacting them with 100 % for 16 hours at 10 bar and 60 °C. Afterwards, their compressive strength was measured.

The amount of solid solution comprising akermanite, gehlenite and akermanite-gehlinite intermediate phases, as well as the amount of diopside and merwinite in the carbonatable binder composition was investigated using X-ray diffraction (XRD). A PANalytical Empyrean was used with Rietveld for quantification and an external rutile standard for calculating the quantity of amorphous. HighScore 5.0 Plus software and the PDF-4 database supported the analyses. The akermanite content is expressed as its % by weight, based on the total weight of the binder composition.

To evaluate the reactivity of the binder compositions to CO₂, the amount of CO₂ captured (expressed as kg CO₂ per 1000 kg binder composition) was calculated. The degree to which CO₂ is captured is a measure for the reactivity of the binder composition towards CO₂, and thus in the carbonation reaction.

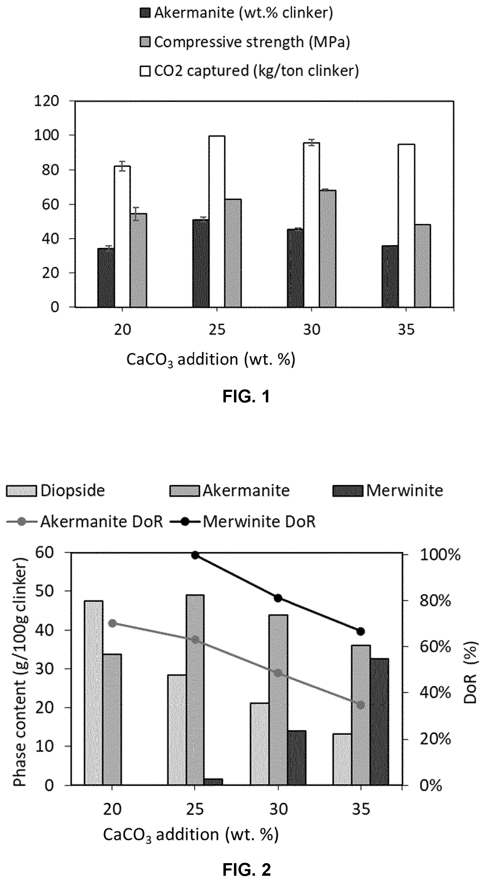

Fig. 1 shows the content of the akermanite-gehlenite solid solution ("akermanite") in the four binder compositions, as well as the amount of CO₂ captured by the binder compositions and the compressive strength of the carbonated binder compositions. The highest akermanite content was obtained for the binder composition obtained from the reactive mixture comprising 25 wt.% CaCO₃. This binder composition also leads to the highest CO₂ uptake after carbonation, and shows a very high compressive strength.

In addition, the degree of reaction (DoR) of both the akermanite (i.e. the solid solution of akermanite, gehlenite and their intermediate phases) and the merwinite in the binder composition was measured based on the XRD results of the binder composition before and after carbonation. Fig. 2 shows the amount of diopside, akermanite and merwinite in the binder compositions, and the DoR for akermanite and merwinite. It is clear that merwinite, formed for CaCO₃ contents equal to and higher than 25 wt.%, has a very high DoR, which positively contributes to the amount of the CO₂ captured during carbonation, and should thus positively contribute to the compressive strength as well. However, from Fig. 1 a drop in the compressive strength was noticed for the binder composition obtained from the 35 wt.% CaCO₃ reactive mixture, while the CO₂ uptake remained high, and although a significant amount of merwinite was measured. This high CO₂ uptake can thus be contributed to the presence of merwinite having a high DoR in addition to the presence of akermanite. Further, the drop in compressive strength seems to be caused by a decrease of the DoR of the akermanite (the solid solution). From Fig. 2 it follows that the DoR of akermanite strongly depends on the diopside content in the binder compositions: the diopside content decreases with increasing amount of CaCO₃ in the reactive mixture, and the DoR decreases in parallel with the diopside content decrease. This seems to confirm the inventor's discovery that Al present in the initial mineral source material is partially taken up by the diopside and partially shifts the akermanite formation towards gehlenite, wherein a lower amount of diopside leaves more Al available for the akermanite-to-gehlenite formation, leading to an akermanite-gehlenite solid solution having a lower fraction of highly reactive phases, and thus to a lower DoR.

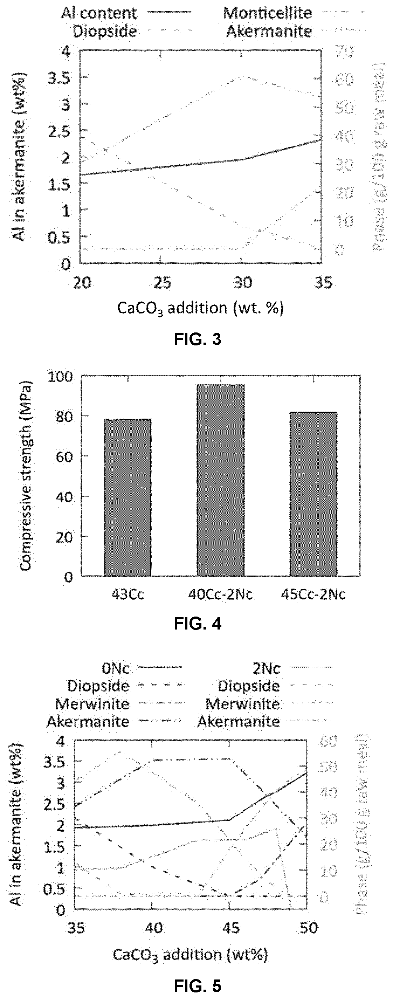

To confirm these findings, the phase composition of the four binder compositions was calculated theoretically using FactSage thermodynamic simulations in the Equilibrium module of FactSage 8.2 using the chemical composition from X-ray fluorescence (XRF) measurements as input. The chemical composition of the mineral source material and that of CaCO₃ are known, therefore the chemical composition of each mixture containing 20-35 wt.% CaCO₃ can be calculated. The stable mineral phase composition was simulated for each mixture. Simulations were carried out based on the FT Oxid and FactPS databases using a constant oxygen partial pressure of 0.1 to simulate the conditions in a clinkering furnace. The simulated phase composition as function of CaCO₃ addition is shown in Fig. 3.

A maximal akermanite content is simulated at a CaCO₃ addition of 30 wt%, which is very close to what is shown experimentally in Fig. 1. In addition, the Al-concentration in akermanite (i.e. Al that shifts the akermanite formation to gehlenite and akermanite-gehlenite intermediate phases) increases with decreasing diopside content. The simulation further showed monticellite, which does not seem to incorporate any Al. Although monticellite is the thermodynamically more favorable phase (as shown in the simulation), it is known that kinetic hinderance results in the formation of merwinite instead (as shown experimentally in Fig. 2). The theoretical simulation generally confirms the experimental results and seems to confirm the theory by the inventors, i.e. that Al is incorporated by both diopside and akermanite, thereby impacting the DoR of akermanite (solid solution) and the compressive strength of the carbonated article.

### Example 2

A further mineral source material comprising 50 wt.% SiO₂, 25 % wt.MgO, 3% wt.CaO, 5% wt.Al₂O₃ and 15 wt.% FeO, based on the total weight of the mineral source material, was used to prepare three further mixtures by adding 40, 43 and 45 wt.% of CaCO₃, based on the total weight of the respective mixture, to the mineral source material. 2 wt.% of Na₂CO₃ as alkali source, based on the total weight of the mineral source material, was added to the mixtures comprising 40 wt.% and 45 wt.% CaCO₃. The mixtures were then heated to 1150 °C in air at a heating rate of 3 °C/min and were then maintained at 1150 °C in air for 30 minutes. Afterwards, they were cooled at a cooling rate of 3 °C/min.

The obtained carbonatable binder compositions were then milled to obtain a particulate material having a d₅₀ of 10 µm, as measured by laser diffraction according to standard ASTM B822-20 (2020). The moisture content of the binder compositions was adjusted to 8 % by weight of moisture, based on the total weight of the binder composition. The binder compositions were then shaped into cylinders of 23 mm diameter and 20 mm height, and were then carbonated by contacting them with 100 % CO₂ for 16 hours at 10 bar and 60 °C. Fig. 4 shows the compressive strength for the three obtained carbonated articles, wherein 43Cc refers to the reactive mixture comprising 43 wt.% CaCO₃ and no Na₂CO₃, and 40Cc-2Nc and 45Cc-2Nc refer to the reactive mixtures comprising 40 wt.% and 45 wt.% CaCO₃, respectively, and 2 wt.% Na₂CO₃. The highest compressive strength was obtained with the 40Cc-2Nc reactive mixture.

To better understand the obtained compressive strengths, the phase composition of the three binder compositions was calculated theoretically in the same way as in example 1. Fig. 5 shows the results, which indicate that the binder compositions 40Cc-2Nc and 43 Cc show a similar akermanite content (again wherein "akermanite" refers to the solid solution including akermanite, gehlenite, and their intermediate phases). Both binder compositions do not comprise any merwinite. In other words, when comparing the compressive strength of Fig. 4 for a comparable akermanite content based on the theoretical phase calculation of Fig. 5, the addition of 2 wt.% Na₂CO₃ increased the compressive strength.

The inventors attribute this result to the reaction of Na₂CO₃ with a portion of the Al in the mineral source material (and thus in the reactive mixture) during heating, forming Na-aluminosilicate phases and leaving less Al available for shifting the akermanite formation to gehlenite, i.e. resulting in a solid solution into which less Al is incorporated, thus having a higher fraction of akermanite. This, as explained in example 1, leads to carbonated articles having a higher compressive strength. The is confirmed by the theoretical calculation shown in Fig. 5, where for all binder compositions - obtained from reactive mixtures comprising between 35 wt.% and 50 wt.% CaCO₃ - the amount of Al in akermanite (thus in the solid solution) was lower when 2 wt.% Na₂CO₃ was added to the reactive mixture.

The result for 45Cc-2Nc, looking at its phase composition in Fig. 5, shows that the Na₂CO₃ addition effectively countered the effect of the absence of diopside by limiting the increase of Al concentration in akermanite and keeping its reactivity high, which resulted in a smaller decrease in the compressive strength than what was expected.

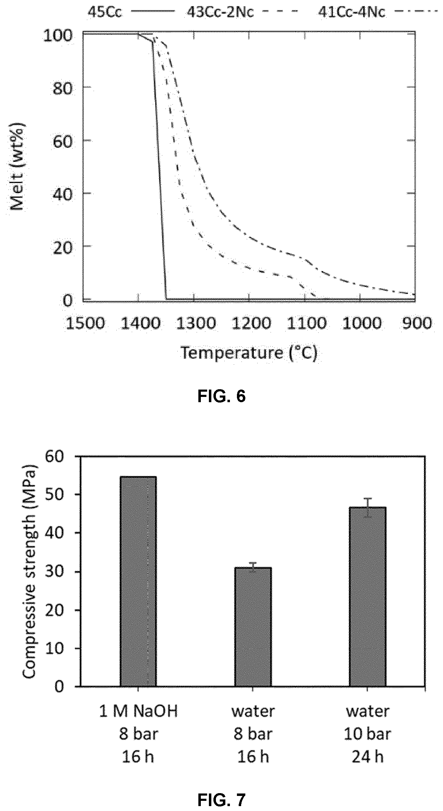

Based on the theoretical calculations hereinabove, the amount of melt phase in the reactive mixture in function of the temperature to which the reactive mixture is heated was simulated. Fig. 6 shows the simulated melt-temperature curves for three reactive mixtures: 41 wt.% CaCO₃ added, as well as 4 wt.% Na₂CO₃ as alkali source (41 Cc-4Nc), 43 wt.% CaCO₃ added, as well as 2 wt.% Na₂CO₃ as alkali source (43 Cc-2Nc), and 45 wt.% CaCO₃ added, no alkali source added (45 Cc). 10 wt.% or higher of melt phase in the reactive mixture is known to increase the kinetics of the heating process. From Fig. 6 it is clear that the addition of Na₂CO₃ allows to obtain a melt phase of at least 10 wt.% at lower temperatures than when no Na₂CO₃ is added. Whereas the ideal temperature for the 45Cc sample is 1300 °C, it is only 1150 °C for the 43Cc-2Nc sample.

### Example 3

45 % CaCO₃, based on the total weight of the respective mixture, was added to the mineral source material of Example 2. The obtained mixture that was then heated to 1300 °C in air at a heating rate of 3 °C/min and was then maintained at 1300 °C in air for 30 minutes. Afterwards, the produced binder was cooled at a cooling rate of 3 °C/min. The moisture content of the binder composition was adjusted to 9.5 wt.% by adding water or a 1 M NaOH solution, respectively. The two moisturized carbonatable binder compositions were carbonated by contacting them with 100 % CO₂ for 16 hours at 8 bar and 60 °C. The water-moisturized binder composition was also carbonated by contacting it with 100 % CO₂ for 24 hours at 10 bar and 60 °C. The compressive strength of the three carbonated articles was measured and is shown in Fig. 7. It is clear that the addition of NaOH as alkali source to the carbonatable binder composition prior to carbonation lead to the highest compressive strengths at moderate carbonation conditions (increase from approx. 30 MPa to more than 50 MPa). Even carbonation of the water-moisturized binder composition for a longer duration and at a higher pressure (24 hours at 10 bar, 100 % CO₂, and 60 °C) does not allow to obtain a similar high compressive strength as the one obtained with the 1 M NaOH moisturized binder composition.

## Claims

1. A method for producing a carbonatable binder composition comprising a mixed Ca-Mg silicate, wherein the method comprises heating a reactive mixture to a temperature between 800 °C and 1400 °C, wherein the reactive mixture comprises:
- between 40 and 90 % by weight of a mineral source material comprising a Mg-comprising silicate, and
- between 60 and 10 % by weight of a Ca-comprising compound,
wherein the percentage by weight of each component of the reactive mixture is based on the total weight of the reactive mixture,
**characterized in that** a molar ratio of elemental Mg to elemental Si in the mineral source material is between 5:1 and 1:5, **in that** the Ca-comprising compound is capable of reacting with the Mg-comprising silicate, and **in that** the mineral source material comprises equal to or lower than 10 % by weight of Al, based on the total weight of the mineral source material, wherein the amount of Al is expressed as Al oxide in the mineral source material.

2. The method according to claim 1, wherein the molar ratio of elemental Mg to elemental Si in the mineral source material is between 2:1 and 1:2, preferably between 1.5:1 and 1:1.5.

3. The method according to any one of the preceding claims, wherein the Ca-comprising compound comprises a Ca-comprising carbonate, preferably CaCO₃.

4. The method according to any one of the preceding claims, wherein the Mg-comprising silicate is MgSiO₃, Mg₂SiO₄ or diopside (CaMgSi₂O₆).

5. The method according to claim 4, wherein the Mg-comprising silicate is diopside, and wherein the mineral source material comprises at least 10 % by weight, preferably at least 15 % by weight, more preferably at least 20 % by weight of diopside, based on the total weight of the mineral source material.

6. The method according to any one of the preceding claims, comprising adding a first alkali source to the reactive mixture prior to heating the reactive mixture, wherein the first alkali source comprises one or more of a Na and/or K comprising salt, carbonate, sulphate or hydroxide.

7. The method according to claim 6, wherein the first alkali source comprises Na₂CO₃ and/or NaOH.

8. The method according to claim 6 or claim 7, wherein equal to or lower than 10 % by weight of the first alkali source is added, based on the weight of the reactive mixture prior to adding the first alkali source.

9. The method according to any one of claims 6 to 8, wherein the reactive mixture comprising the first alkali source is heated to a temperature between 800 °C and 1200 °C.

10. A carbonatable binder composition comprising a mixed Ca-Mg silicate, **characterized in that** the carbonatable binder composition comprises at least 15 % by weight of akermanite (Ca₂MgSi₂O₇), preferably at least 20 % by weight, more preferably at least 25 % by weight, based on the total weight of the carbonatable binder composition.

11. A method of producing a carbonate bonded article, comprising contacting the carbonatable binder composition obtained with the process of any one of claims 1 to 9 or the carbonatable binder composition of claim 10 with CO₂ at a temperature between 10 °C and 100 °C and at a CO₂ pressure equal to or lower than 2 MPa.

12. The method according to claim 11, comprising adding a second alkali source to the carbonatable binder composition prior to contacting the carbonatable binder composition with CO₂, wherein the second alkali source comprises one or more of a Na and/or K comprising salt, carbonate, sulphate or hydroxide, preferably NaOH.

13. The method according to claim 12, wherein the second alkali source is added as a solid compound in an amount of equal to or lower than 10 % by weight, based on the weight of the carbonatable binder composition.

14. The method according to claim 12 or claim 13, wherein the second alkali source is added as an aqueous solution having a concentration of the second alkali source equal to or lower than 10 M, wherein the aqueous solution is added in an amount between 5 and 60 % by weight, based on the weight of the carbonatable binder composition.
